# EUROPÄISCHE PATENTSCHRIFT

(11) **EP 1 034 958 B1**
(45) Veröffentlichungstag und Bekanntmachung des Hinweises auf die Patenterteilung: **30.11.2005**
(21) Anmeldenummer: 00102825.7
(22) Anmeldetag: 11.02.2000
(51) Int. Cl.: B60K 15/00, B67D 5/04

(54) **Einrichtung und Verfahren zur Durchflussprüfung eines Behälter-Anschlusses**
Device and process for a flow rate test of a tank connector
Dispositif et procédé pour essai du débit de la connection d'un récipient

(30) Priorität: 10.03.1999 DE 19910486
(43) Veröffentlichungstag der Anmeldung: 13.09.2000
(73) Patentinhaber: bielomatik Leuze GmbH + Co. KG, 72639 Neuffen (DE)
(72) Erfinder: Korte, Jörn, Dr., 72584 Hülben (DE)
(74) Vertreter: Patentanwälte Ruff, Wilhelm, Beier, Dauster & Partner

(56) Entgegenhaltungen:
- DE-A- 4 232 148
- DE-A- 4 312 721
- DE-A- 4 342 431
- DE-A- 19 538 775

## Beschreibung

Die Erfindung betrifft eine Einrichtung bzw. ein Verfahren nach dem Oberbegriff des Anspruches 1 bzw. 8. Eine solche Vorrichtung bzw. ein solches Verfahren sind aus der gattungsgemäßen DE 195 38 775 A bekannt.

Behältnisse müssen im Betrieb einerseits dicht und andererseits ausreichend zu entlüften sein, z.B. beim oder nach dem Füllen mit einer Flüssigkeit, die leicht flüchtig ist und daher ausgast. Hierzu weist der Behälter einen Anschluß bzw. eine Anschlußeinheit auf, welche aus einem einzigen oder mehreren Einzelanschlüssen, wie Schlauchnippeln besteht. An sie sind gesonderte Entlüftungsschläuche anzuschließen, um den Entlüftungsstrom an geeigneter Stelle zu sammeln. Bei Kraftstoffbehältern aus Kunststoff o. dgl. ist jeder Nippel für sich an der Außenseite der Behälterwandung mit einer Verbindung, wie einer Schweißverbindung, befestigt. Der Nippelkanal ist dann über eine Öffnung in der Behälterwandung an das Innere des Behälters angeschlossen.

Bei der Herstellung des Nippels oder der Verbindung können die Durchlaßquerschnitte verengt oder verschlossen werden. Sie lassen dann bei einem gegebenen Druckgefälle von z.B. höchstens 7 oder 6 mbar einen ausreichenden Volumenstrom von z.B. mindestens 40 oder 50 l/min nicht mehr durch. Bei Kraftstoffbehältern von Brennkraftmaschinen, insbesondere von Kraftfahrzeugen, wie Personenkraftwagen, wird von den Automobil-Herstellern eine gemeinsame Durchlässigkeit aller Entlüftungsnippel von z.B. etwa 60 l/min bei einem Überdruck von etwa 5 mbar im Kraftstoffbehälter verlangt. Diese Durchlässigkeit ist daher vor Einbau des Behälters im Kraftfahrzeug bzw. vor dichtem Verschließen des Behälters zu prüfen. Statt dieser Prüfung des noch trockenen Behälters kann aber auch eine Prüfung nach dem genannten Einbau zweckmäßig sein. Dann läßt sich z.B. die Funktionsfähigkeit bzw. Durchlässigkeit einer Tankentlüftungsanlage während ihres bestimmungsgemäßen Betriebes auch unter Füllung feststellen, zumal ggf. Verschmutzungen die Durchlaßquerschnitte verengen können.

Für diese Prüfung kann eine Staudruckprüfung herangezogen werden. Bei ihr wird ein gasförmiger Prüfstrom, wie Luft, durch den Anschluß in den Behälter geleitet und anhand eines evtl. auftretenden Überdruckes in der Prüfleitung eine Verengung der Durchlässigkeit des Anschlusses festgestellt. Hierzu muß jedoch ein verhältnismäßig hohes Druckgefälle erzeugt werden, z.B. so, daß bei verschlossenem Durchlaßquerschnitt der Überdruck in der Prüfleitung etwa 1 bar beträgt. Es kann daher der Volumenstrom der Durchlässigkeit bei einem wesentlich niedrigeren Druckgefälle von z.B. weniger als 200 oder 50 mbar nicht gemessen werden. Weiterhin ist die Erzeugung des genannten Überdruckes technisch aufwendig. Der Druckstrom führt zu sehr hohen Volumenströmen und daher bei der Prüfung zu starken Geräuschentwicklungen. Auch die Abdichtung zwischen Prüfleitung und Behälter-Anschluß ist durch den hohen Prüfdruck erschwert. Mit zunehmendem Durchlaßquerschnitt des Behälter-Anschlusses nimmt die Prüfgenauigkeit ab. Diese Genauigkeit ist bereits bei einem Durchlaßquerschnitt von 30 mm² entsprechend einem Durchlaßdurchmesser von 6 mm unzureichend gering. Zu prüfende Behälter-Anschlüsse haben jedoch auch wesentlich größere Durchlaßquerschnitte von z.B. 80 mm² entsprechend 10 mm Durchlaßdurchmesser, 115 mm² entsprechend 12 mm Durchlaßdurchmesser oder 155 mm² entsprechend 14 mm Durchlaßdurchmesser.

Der Erfindung liegt die Aufgabe zugrunde, eine Einrichtung bzw. ein Verfahren zu schaffen, mit welchem Nachteile bekannter Ausbildungen vermieden werden können. Insbesondere soll auch bei großen Durchlaßquerschnitten eine genaue Prüfung möglich sein. Weiterhin soll die Durchlässigkeit unter realen Prüfbedingungen zu prüfen sein. Der Verbrauch an Prüfmedium soll gering sein. Ferner soll die Prüfung geräuscharm durchzuführen bzw. der jeweilige Einzelanschluß bei geringem Aufwand dicht mit der Prüfleitung zu verbinden sein.

Erfindungsgemäß sind die Merkmale nach Anspruch 1 bzw. 8 vorgesehen. Im Falle einer vollautomatischen Prüfung auf einer Förder- und Fertigungsstraße wird der Behälter nacheinander in eine Halterung eingelegt, durch Spannung gesichert, durch Ausschneiden mit Öffnungen in seiner Wandung versehen, im Bereich der jeweiligen Öffnung ein Anschlußkörper durch Schweißen o. dgl. befestigt und dann die Durchlässigkeit dieser Anschlußverbindung geprüft. Der Behälter kann mehr als 10, 20 oder 30 solcher Einzelanschlüsse aufweisen, die gleichzeitig und/oder sequentiell geprüft werden. Z.B. kann der Behälter in einer Schweißstation mit mehreren Anschlüssen versehen und dann mit dem Förderer in eine nächste Schweißstation überführt werden, in welcher weitere Anschlüsse befestigt werden. Bereits in der ersten oder in der nachfolgenden Station kann die Prüfung der Durchlässigkeit der befestigten Anschlüsse erfolgen, während gleichzeitig weitere Anschlüsse befestigt werden.

Zur zuverlässigen Prüfung mit Unterdruck bzw. einem Saugstrom genügt ein sehr geringes Druckgefälle zwischen Prüfleitung und Behälterkammer. Dadurch ist eine Verformung des Behälters unter dem Druckgefälle auch dann vermieden, wenn der formsteife Behälter sehr dünne Wandungen hat. Ferner sind der Druckluftverbrauch sowie die Lärmentwicklung niedrig. Die Dichtheit des Überganges zwischen Prüfleitung und Behälter-Anschluß ist auch dann einfach herzustellen, wenn die Prüfleitung während der Prüfung nur durch axiale oder radiale Anpressung sowie linear abhebbar mit dem Behälter-Anschluß verbunden ist. Die Durchlässigkeit kann als Volumenstrom bei einem konstanten Druckgefälle unmittelbar gemessen werden. Bei allen genannten Durchlaßquerschnitten ist die Meßgenauigkeit sehr hoch.

Der jeweilige Einzelanschluß oder alle Einzelanschlüsse des Behälter-Anschlusses haben als Spezifikation eine nominale, also für den bestimmungsgemäßen Betrieb vorgesehene geringste Soll-Durchlässigkeit. Der Unterdruck von z.B. 5 mbar ist so gewählt, daß er in der Prüfleitung dann herrscht, wenn diese Soll-Durchlässigkeit gegeben ist. Es kann dann so vorgegangen werden, daß eine Funktions- oder Kalibrierkurve erstellt wird, welche den Zusammenhang zwischen dem Unterdruck und dem Volumenstrom wiedergibt. Die Änderungen des Unterdruckes werden bei konstanter Saugleistung und sich ändernden effektiven Durchlaßquerschnitten gemessen. Die Änderungen des Volumenstromes werden bei konstantem Unterdruck und ebenfalls bei sich ändernden effektiven Durchlaßquerschnitten gemessen. Anhand der daraus sich ergebenden Kalibrierkurve kann bei konstanter Saugleistung durch eine Unterdruckmessung bestimmt werden, ob die Soll- oder Mindestdurchlässigkeit gegeben ist.

Die Prüfung kann aber auch durch unmittelbare Messung des Volumenstromes in der Prüfleitung erfolgen, wenn dabei der angelegte Unterdruck konstant gehalten wird.

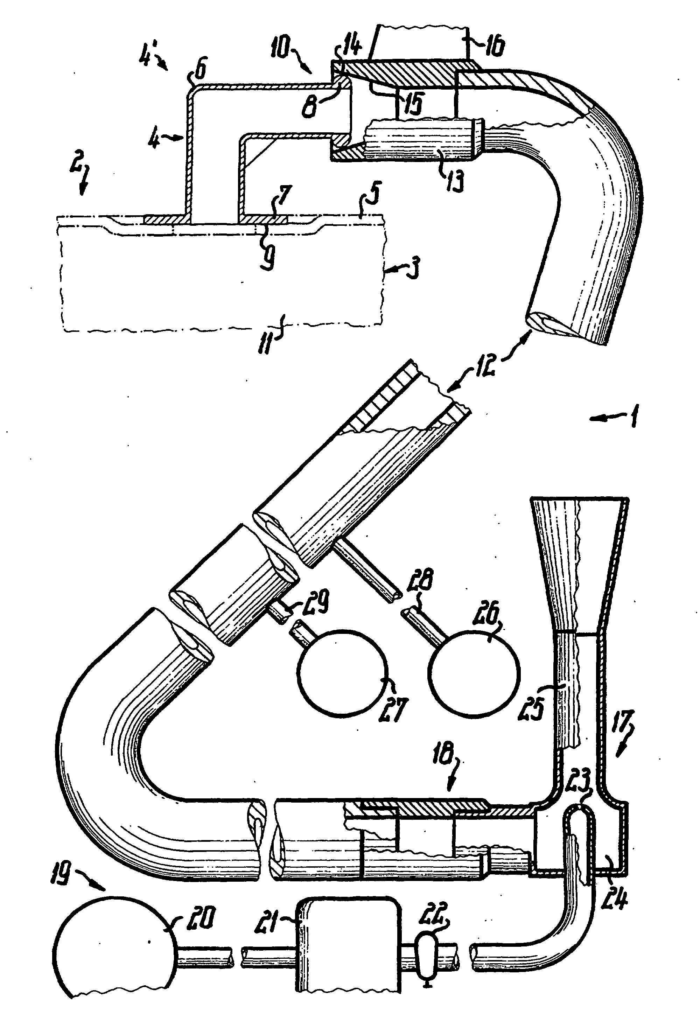

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert. Die Zeichnung zeigt:
eine erfindungsgemäße Einrichtung in vereinfachter Darstellung.

Die Einrichtung 1 dient zur Feststellung des Strömungsdurchlasses an einem Prüfling 2. Der besteht aus einem Behälter 3 und einem Behälter-Anschluß 4', nämlich einer Vielzahl von Einzelanschlüssen 4, von denen nur einer dargestellt ist. Der einteilige Behälter 3 weist Wandungen 5 aus thermoplastischem Kunststoff auf, an deren Außenseiten die Anschlüsse 4 befestigt sind. Jeder einteilige Anschluß 4 besteht aus thermoplastischem Kunststoff und weist ein winkelförmiges oder gerades Rohr 6 sowie an jedem Rohrende einen Flansch 7, 8 auf. Der ring- oder scheibenförmige Flansch 7 ist über eine Schweißverbindung 9 befestigt. Die Naht 9 verbindet die äußere Stirnfläche des Flansches 7 mit der Außenseite der Wand 5 ringförmig dicht um eine Öffnung. Die Öffnung durchsetzt die Wand 5 und ist größer als der kleinste oder durchgehend konstante Durchlaßquerschnitt des Anschlusses 4.

Für die Prüfung wird der freie Flansch 8 über eine Prüf-Verbindung 10 an die Einrichtung 1 leicht lösbar sowie nur während der Prüfung angeschlossen. Danach wird diese Verbindung 10 vor der Weiterförderung des Prüflings 2 wieder gelöst. Die Einrichtung 1 weist eine Prüfleitung 12 und an deren freiem Ende ein Kupplungsstück 13 der Verbindung 10 auf, deren anderes Kupplungsstück der Flansch 8 bildet. Dadurch kann der konstante Durchlaßquerschnitt der Leitung 12 und des Kupplungsstückes 13 in einer axial linearen Bewegung dicht an den gleich großen Durchlaßquerschnitt des Anschlusses 4 angeschlossen und in entgegengesetzter Richtung wieder gelöst werden. Der Dichtungssitz 14 zwischen Anschluß 4 und Prüfleitung 12 ist durch den Außenumfang des Flansches 8 und einen spitzwinkligen Innenkonus 15 des Kupplungsstückes 13 gebildet. Statt dessen oder zusätzlich kann am Innenumfang des Kupplungsstückes 13 eine Elastomerdichtung in Form eines Ringes für den Sitz 14 vorgesehen sein.

Bei der dargestellten Ausführung besteht das Kupplungsstück 13 bzw. der Innenumfang 15 am Sitz 14 aus einem gegenüber dem Anschluß 4 drucksteiferen bzw. unelastischeren Werkstoff, wie Metall. Die Prüfleitung 12 kann flexibel, z.B. ein Schlauch, sein. Unter den auftretenden Druckgefällen wird jedoch der Durchlaßquerschnitt der Prüfleitung 12 nicht verändert. Die Prüfleitung 12 kann am Kupplungsstück 13 mit einem Halter 16 versehen sein. Er richtet das Kupplungsstück 13 aus und ist z.B. mit einem beweglichen und motorisch angetriebenen Arm verbunden. Der Arm führt das Kupplungsstück 13 bei stationärem Prüfling 2 an den Anschluß 4 heran und stellt die Verbindung 10 her.

Das andere Ende der Prüfleitung 12 ist über einen Anschluß 18 leicht lösbar an eine Unterdruck-Quelle 17, wie eine Venturi-Düse, angeschlossen. Diese Quelle 17 ist ihrerseits an eine Druckquelle 19 für Gas bzw. Luft angeschlossen. Die Druckquelle 19 umfaßt eine Pumpe 20 und einen an deren Druckluft-Ausgang angeschlossenen Speicher 21 für Druckluft. Der Ausgang des Speichers 21 bzw. der Druckquelle 19 ist über ein Ventil 22 an eine Düse 23 der Quelle 17 angeschlossen. Bei Austritt der Druckluft aus der Düse 23 in einen Kanal oder Trichter 25 wird stromaufwärts der Düse 23 in einer Kammer 24 ein Unterdruck erzeugt. Dadurch entsteht in der Prüfleitung 12 ein Saugstrom, welcher durch die Kammer 24, von dieser durch den Saugkanal 25 und als Druckluftstrom aus dem Saugkanal 25 ins Freie strömt. Bei hergestellter Verbindung 10 strömt der Saugstrom außerdem durch freie Öffnungen in die Kammer 11 des Behälters 3, von der Kammer 11 durch die Öffnung der Wandung 5 in den Anschluß 4 und von diesem in die Prüfleitung 12.

Unmittelbar im Durchlaßquerschnitt der Prüfleitung 12 oder mittelbar an diesen Durchlaßquerschnitt angeschlossen sind Sensoren 26, 27 vorgesehen. Sie sind über gesonderte Zweigleitungen 28, 29 an den Durchlaßquerschnitt der Prüfleitung 12 angeschlossen. Der näher beim Kupplungsstück 13 liegende Sensor 26 gehört zu einem Strömungsaufnehmer. Mit ihm wird der Volumenstrom bzw. dessen Änderung in der Prüfleitung 12 kontinuierlich gemessen. Der andere Sensor 27 gehört zu einem Meßgerät, mit welchem der Unterdruck bzw. dessen Änderungen im Strömungskanal kontinuierlich gemessen wird. Der Abstand der zugehörigen Meßstelle am Strömungskanal 12 vom Kupplungsstück 13 wird möglichst klein gewählt. Er kann entlang der Prüfleitung 12 auch höchstens 1,5 bis 1 m oder 2 bis 3 m betragen.

Zur Durchflußmessung des Nippels 4 und der Verbindung 9 wird der Prüfling 2 motorisch in den Arbeitsbereich der Einrichtung 1 gefördert. Danach wird an den zu prüfenden Nippeln 4 jeweils ein Kupplungsstück 13 der Prüfleitung 12 oder gesonderter Prüfleitungen 12 dicht angeschlossen. Hierzu wird das Kupplungsstück 13 zur Herstellung des Sitzes 14 motorisch gegen den Nippel 4 bewegt. Zuvor, währenddessen oder unmittelbar danach wird durch die Prüfleitung 12 ein Saugstrom gefördert, z.B. durch Öffnen des Ventiles 22, das als Druckregelventil auch den Unterdruck in der Prüfleitung 12 permanent konstant hält. Nunmehr wird mit der Einrichtung 26 der die Prüfleitung 12 durchsetzende Volumenstrom gemessen. Ist dieser ausreichend hoch, so ist das Prüfergebnis positiv. Liegt er jedoch unter einem Grenzwert, so wird in der Einrichtung 26 ein entsprechendes Signal erzeugt, das über eine Signalleitung an eine nicht näher dargestellte Anzeigeeinrichtung weitergegeben wird. Dadurch wird der zugehörige Prüfling 2 als Ausschuß identifiziert und von der bestimmungsgemäßen Verwendung ausgeschlossen. Nach der Prüfung wird die Verbindung 10 wieder gelöst und der Prüfling 2 wird mit dem Förderer weiter transportiert. Zuvor, währenddessen oder danach kann auch der Saugstrom in der Prüfleitung 12 abgestellt werden.

Statt dessen ist es auch möglich, die Druckleistung der Druckquelle 19 bzw. die Saugleistung der Unterdruckquelle 17 und daher die Saugleistung in der Prüfleitung 12 unabhängig von den Durchlaßquerschnitten des Prüflings 2 konstant zu halten. In diesem Fall wird mit der Einrichtung 27 der Unterdruck in der Prüfleitung 12 gemessen. Ist dieser Unterdruck ausreichend gering, so ist das Prüfungsergebnis positiv. Ist jedoch der Unterdruck zu hoch, so ist der Prüfling 2 als Ausschuß identifiziert und es wird weiter so verfahren, wie oben anhand der Prüfung mit der Einrichtung 26 beschrieben.

## Patentansprüche

1. Einrichtung zur Durchflußprüfung eines Behälter-Anschlusses (4') aus mindestens einem Einzelanschluß (4), insbesondere von geschweißten Anschlußnippeln an Kraftstoff-Behältern (3) aus Kunststoff o. dgl., **dadurch gekennzeichnet, dass** eine an den Einzelanschluß (4) anzuschließende Prüfleitung (12) für ein Prüffluid, das Prüfwerte bestimmt, nämlich einen Fluiddruck, einen Volumenstrom o. dgl., vorgesehen ist und daß Mittel zur Durchflußprüfung anhand einer Ansaugung vorgesehen sind.

2. Einrichtung nach Anspruch 1, d.g., daß die Ansaugmittel eine Prüf-Druckquelle zum Anschluß an die Prüfleitung (12) umfassen, die einen kleinsten nominalen Durchlaßquerschnitt aufweist, daß mindestens ein Sensor (26, 27) zur Erfassung wenigstens eines der Prüfwerte vorgesehen ist, und daß die Prüfleitung (12) eine Saugleitung sowie die Prüf-Druckquelle eine Unterdruckquelle (17) ist.

3. Einrichtung nach Anspruch 1 oder 2, **dadurch gekennzeichnet, daß** zum leicht lösbaren, individuellen Anschließen der Ansaugmittel an den Einzelanschluß (4) ein Kupplungsstück (13) vorgesehen ist, daß insbesondere das Kupplungsstück (13) eine linear abgedichtet an den Einzelanschluß (4) anzufügende Steckmuffe ist, und daß vorzugsweise das Kupplungsstück (13) zur Anlage am Einzelanschluß (4) einen Dichtkonus (15) aufweist.

4. Einrichtung nach einem der vorhergehenden Ansprüche, **dadurch gekennzeichnet, daß** die Ansaugmittel zur Erzeugung eines Unterdruckes an eine Druckquelle (19) angeschlossen sind, daß insbesondere die Druckquelle (19) über einen Durchlaßquerschnitt an die Unterdruckquelle (17) angeschlossen ist, welcher kleiner als der nominale Durchlaßquerschnitt der Prüfleitung (12) ist, und daß vorzugsweise die Unterdruckquelle (17) eine Venturi-Düse ist.

5. Einrichtung nach einem der vorhergehenden Ansprüche, **dadurch gekennzeichnet, daß** Steuermittel (19, 22) zum Betrieb der Ansaugmittel bei gesperrtem Durchlaßquerschnitt mit einem Unterdruck von höchstens 100 mbar, insbesondere höchstens 20 mbar, und vorzugsweise höchstens 10 mbar vorgesehen sind.

6. Einrichtung nach einem der vorhergehenden Ansprüche, **dadurch gekennzeichnet, daß** den Ansaugmitteln ein Unterdruck-Sensor (27) zugeordnet ist, daß insbesondere der Unterdruck-Sensor (27) zur Betätigung an eine Signaleinrichtung angeschlossen ist, und daß vorzugsweise der Unterdruck-Sensor (27) über eine Zweigleitung (29) an die Prüfleitung (12) angeschlossen ist.

7. Einrichtung nach einem der vorhergehenden Ansprüche, **dadurch gekennzeichnet, daß** den Ansaugmitteln ein Volumenstrom-Sensor (26) zugeordnet ist, daß insbesondere der Volumenstrom-Sensor (26) zur Betätigung an eine Signaleinrichtung angeschlossen ist, und daß vorzugsweise der Volumenstrom-Sensor (26) über eine Zweigleitung (28) an die Prüfleitung (12) angeschlossen ist.

8. Verfahren zur Durchflußprüfung eines Behälter-Anschlusses (4') aus mindestens einem Einzelanschluß (4), insbesondere von geschweißten Anschlußnippeln an Kraftstoff-Behältern (3) aus Kunststoff o. dgl., d.g., daß der Behälter (3) über den Behälter-Anschluß (4') durch Ansaugung mit einem Fluid-Strom eines Prüffluids beaufschlagt und dabei mindestens ein Prüfwert, nämlich ein Druck, ein Volumenstrom o. dgl., des Fluid-Stromes erfaßt sowie zur Bestimmung des Durchlaßquerschnittes des Einzelanschlusses ausgewertet wird.

9. Verfahren nach Anspruch 8, **dadurch gekennzeichnet, daß** die Ansaugung des Fluid-Stroms durch den Einzelanschluß (4) aus dem Behälter (3) gerichtet wird, und daß insbesondere dabei der Druck im Behälter (3) im wesentlichen konstant gehalten wird.

10. Verfahren nach Anspruch 8 oder 9, **dadurch gekennzeichnet, daß** der Behälter (3) während der Ansaugung und außerhalb des Behälter-Anschlusses (4') zur Füllung mit dem Fluid-Strom mit einem Durchflußquerschnitt offen gehalten wird, welcher mindestens so groß wie der bestimmungsgemäße Durchflußquerschnitt des Behälter-Anschlusses ist, daß insbesondere der Behälter (3) während der Prüfung bis auf den Behälter-Anschluß (4') zur Ansaugung aus der umgebenden Atmosphäre unmittelbar geöffnet ist, und daß vorzugsweise durch den Einzelanschluß (4) über einen Durchlaßquerschnitt angesaugt wird, der im wesentlichen gleich dem bestimmungsgemäßen Durchlaßquerschnitt des Einzelanschlusses (4) ist.

11. Verfahren nach einem der Ansprüche 8 bis 10, **dadurch gekennzeichnet, daß** eine Mehrzahl, wie mindestens 5 bzw. 10, Einzelanschlüsse (4) des Behälters (3) gleichzeitig und unabhängig voneinander durch gesonderte, ansaugende Fluid-Ströme geprüft wird, daß insbesondere zur Prüfung jeder Einzelanschluß (4) je Einheit seines Durchlaßquerschnittes bei gleichzeitiger Messung des Unterdruckes mit im wesentlichen derselben Saugleistung beaufschlagt wird, und daß vorzugsweise jeder Einzelanschluß (4) unter gleichzeitiger Messung des Volumenstromes mit im wesentlichen demselben Unterdruck beaufschlagt wird.

12. Verfahren nach einem der Ansprüche 8 bis 11, **dadurch gekennzeichnet, daß** für mehrere bis alle Einzelanschlüsse (4) des Behälters (3) der Prüfwert durch Ansaugung gemeinsam erfaßt wird, daß insbesondere die Einzelanschlüsse (4) auf eine gemeinsame Durchlässigkeit von mindestens 40 bis 50 l/min. bei einem Druckgefälle von mindestens 3 bis 5 mbar geprüft werden, und daß vorzugsweise der zu prüfende Durchlaßquerschnitt mindestens eines Einzelanschlusses (4) über 30 bis 150 mm² gewählt wird.

## Claims

1. A device for flow-testing a tank connector (4') comprising at least one individual connector (4) more particularly of welded connector nipples to fuel tanks (3) of a plastics material or the like, **characterized in that** a test conduit (12) connecting the individual connector (4) for a test fluid defining test values, namely a fluid pressure, a volume flow rate or the like, is provided and that means for flow-testing by means of suction are provided.

2. The device as set forth in claim 1, **characterized in that** the suction means comprise a test pressure source for connecting the test conduit (12) having a minimum nominal flow cross-section, and including at least one sensor (26, 27) for sensing at least one of the test values and that the test conduit (12) is a suction conduit and the test pressure source is a vacuum source (17).

3. The device as set forth in claim 1 or 2, **characterized in that** for a quick-release individual connection of the suction means to the individual connector (4) a union (13) is provided, more particularly the union (13) being a spigot for coupling the individual connector (4) in a linear seal and preferably the untion (13) comprising a sealing cone (15) for contacting the individual connector (4).

4. The device as set forth in any of the preceding claims, **characterized in that** the suction means for producing a vacuum are connected to a pressure source (19), more particularly the pressure source (19) being connected to the vacuum source (17) by a flow cross-section which is smaller than the nominal flow cross-section of the test conduit (12), and preferably the vacuum source (17) being a venturi nozzle.

5. The device as set forth in any of the preceding claims, **characterized in that** control means (19, 22) are provided for operating the suction means at a closed flow cross-section with a vacuum of max. 100 mbar, more particularly max. 20 mbar and preferably max. 10 mbar.

6. The device as set forth in any of the preceding claims, **characterized in that** a vacuum sensor (27) is assigned to the suction means, more particularly the vacuum sensor (27) being connected for activating to a signalling means, and preferably the vacuum sensor (27) being connected via a branch conduit (29) to the test conduit (12).

7. The device as set forth in any of the preceding claims, **characterized in that** a volume flow rate sensor (26) is assigned to the suction means, more particularly the volume flow rate sensor (26) being connected for activating to a signalling means, and preferably the volume flow rate sensor (26) being connected via a branch conduit (29) to the test conduit (12).

8. A method for flow-testing a tank connector (4') comprising at least one individual connector (4) more particularly of welded connector nipples to fuel tanks (3) of a plastics material or the like, comprising the steps
- charging the tank (3) via the tank connector (4') by suction with a fluid flow of a test fluid,
- sensing at least one test value, namely a pressure, a volume flow rate or the like of the fluid flow, and
- analyzing the result for determining the flow cross-section of the individual connector.

9. The method as set forth in claim 8, **characterized in that** suction of the fluid flow is obtained through the individual connector (4) from the tank (3) and more particularly the pressure in the tank (3) is maintained substantially constant.

10. The method as set forth in claim 8 or 9, **characterized in that** the tank (3) during suction and outside of the individual connector (4') for filling with the fluid flow is maintained open with a flow cross-section which is at least as large as the defining flow cross-section of the tank connector (4'), more particularly the tank (3) being directly opened during testing except for the tank connector (4') for suctioning from the surrounding atmosphere and preferably suctioning being through the individual connector (4) via a flow cross-section substantially equal to the defining flow cross-section of the individual connector (4).

11. The method as set forth in any of the claims 8 to 10, **characterized in that** a plurality, such as at least 5 or 10, of individual connectors (4) of the tank (3) is tested at the same time and independently of the other by separate suctioning fluid flows and more particularly for testing each individual connector (4) each unit of its flow cross-section is charged substantially by the same suction capacity in simultaneously sensing the vacuum and preferably each individual connector (4) is charged substantially by the same vacuum in simultaneously sensing the volume flow rate.

12. The method as set forth in any of the claims 8 to 11, **characterized in that** the test value of several up to all of the individual connectors (4) of the tank (3) is sensed in common, more particularly the individual connectors (4) being tested for a common flow capacity of at least 40 to 50 l/min, for a pressure gradient of at least 3 to 5 mbar and preferably the flow cross-section to be tested of at least one individual connector (4) being selected from 30 to 150 mm².

## Revendications

1. Dispositif pour examiner le débit d'un raccord de récipient (4') comprenant au moins un raccord individuel (4), notamment de raccords de connexion soudés sur des réservoirs à carburant (3) en matière plastique ou similaires, **caractérisé en ce qu'**on prévoit une conduite d'essai (12) prévue pour un fluide d'essai, faisant suite au raccord individuel (4) et déterminant des valeurs expérimentales, c'est-à-dire une pression de fluide, un débit volumétrique ou similaires, et **en ce qu'**on prévoit des moyens pour examiner le débit à l'aide d'une aspiration.

2. Dispositif d'après la revendication 1 **caractérisé en ce que** les moyens d'aspiration comprennent une source de pression d'essai à raccorder à la conduite d'essai (12) et présentant une section nominale d'écoulement minimale, et **en ce qu'**on prévoit au moins un détecteur (26, 27) pour la saisie d'au moins une des valeurs expérimentales, et **en ce que** la conduite d'essai (12) est une conduite d'aspiration et que la source de pression d'essai est une source de sous-pression (17).

3. Dispositif d'après la revendication 1 ou 2, **caractérisé en ce qu'**on prévoit un élément de couplage (13) pour un raccord individuel, facilement détachable des moyens d'aspiration au raccord individuel (4), **en ce que** notamment l'élément de couplage (13) est un raccord mandriné à force à joindre de manière linéairement étanchée au raccord individuel (4), et **en ce que** de préférence l'élément de couplage (13) présente un cône d'étanchéité (15) pour l'adjacence auprès du raccord individuel (4).

4. Dispositif d'après une des revendications précédentes, **caractérisé en ce que** pour produire une sous-pression, les moyens d'aspiration sont raccordés à une source de pression (19), **en ce que** notamment la source de pression (19) est raccordée à la source de sous-pression (17) au moyen d'une section d'écoulement, qui est inférieure à la section nominale d'écoulement de la conduite d'essai (12), et **en ce que** de préférence !a source de sous-pression (17) est un tube de Venturi.

5. Dispositif d'après une des revendications précédentes, **caractérisé en ce que** pour le fonctionnement des moyens d'aspiration on prévoit des moyens de commande (19, 22) pendant que la section d'écoulement est bloquée à une pression subatmosphérique au plus de 100 mbar, notamment au plus de 20 mbar, et préférablement au plus de 10 mbar.

6. Dispositif d'après une des revendications précédentes, **caractérisé en ce qu'**on attribue un déprimomètre (27) aux moyens d'aspiration, **en ce que** le déprimomètre (27) est notamment raccordé à un dispositif de signalisation pour un actionnement, et **en ce que** de préférence le déprimomètre (27) est raccordé à la conduite d'essai (12) au moyen d'une conduite dérivée (29).

7. Dispositif d'après une des revendications précédentes, **caractérisé en ce qu'**on attribue un détecteur de débit volumétrique (26) aux moyens d'aspiration, **en ce que** le détecteur de débit volumétrique (26) est notamment raccordé à un dispositif de signalisation pour un actionnement, et **en ce que** le détecteur de débit volumétrique (26) est de préférence raccordé à la conduite d'essai (12) au moyen d'une conduite dérivée (28).

8. Procédé pour examiner le débit d'un raccord de récipient (4') comprenant au moins un raccord individuel (4), notamment de raccords de connexion soudés sur des réservoirs à carburant (3) en matière plastique ou similaires, **caractérisé en ce que** le récipient (3) est alimenté par un écoulement de fluide d'un fluide d'essai passant par le raccord de récipient (4') par aspiration et que pendant cette opération au moins une valeur expérimentale du courant de fluide, c'est-à-dire une valeur de pression, de débit volumétrique ou similaires est détectée et évaluée pour déterminer la section d'écoulement du raccord individuel.

9. Procédé d'après la revendication 8, **caractérisé en ce que** l'aspiration du courant de fluide à travers le raccord individuel (4) est orientée vers l'extérieur du récipient (3), et **en ce que** la pression dans le récipient (3) est notamment gardée essentiellement constante.

10. Procédé d'après la revendication 8 ou 9, **caractérisé en ce que** le récipient (3) est gardé ouvert pendant l'aspiration et à l'extérieur du raccord de récipient (4') pour le remplir d'un écoulement de fluide en présentant une section d'écoulement au moins aussi grande que la section d'écoulement du raccord de récipient conforme aux normes de service, **en ce que** le récipient (3) est notamment directement ouvert pendant l'essai, à part le raccord de récipient (4'), pour une aspiration à partir du milieu ambiant, et **en ce que** l'aspiration est produite à travers le raccord individuel (4) de préférence par une section d'écoulement qui correspond essentiellement à la section d'écoulement du raccord individuel (4) conforme aux normes de service.

11. Procédé d'après une des revendications de 8 à 10, **caractérisé en ce qu'**un certain nombre, tel que au moins 5 ou encore 10 raccords individuels (4) du récipient (3) sont examinés en même temps et indépendamment l'un de l'autre par des courants de fluide individuels aspirants, **en ce que** notamment pour un contrôle de chaque raccord individuel (4) est alimenté par une puissance d'aspiration essentiellement identique par unité de sa section d'écoulement, tout en mesurant simultanément la sous-pression, et **en ce que** de préférence chaque raccord individuel (4) est alimenté par une sous-pression essentiellement identique en mesurant simultanément le débit volumétrique.

12. Procédé d'après une des revendications de 8 à 11, **caractérisé en ce que** pour bon nombre jusqu'à tous les raccords individuels (4) du récipient (3) la valeur expérimentale est détectée simultanément par aspiration, **en ce que** notamment les raccords individuels (4) sont examinés en ce qui concerne leur débit conjoint qui s'élève au moins à 40 jusqu'à 50 l/min, avec une chute de pression s'élevant au moins à 3 jusqu'à 5 mbar et **en ce que** de préférence la section d'écoulement à examiner d'au moins un raccord individuel (4) s'élève à une valeur entre 30 et 150 mm².
